# EUROPEAN PATENT SPECIFICATION

(11) **EP 0 672 279 B1**
(45) Date of publication and mention of the grant of the patent: **12.05.1999**
(21) Application number: 94901961.6
(22) Date of filing: 02.12.1993
(51) Int. Cl.: G06F 11/267

(54) **METHOD OF CHECKING THE OPERATION OF A MICROPROCESSOR AND SYSTEM FOR IMPLEMENTING THE METHOD**
MIKROPROZESSOROPERATIONSPRÜFVERFAHREN UND SYSTEM DAFÜR
PROCEDE POUR SURVEILLER LE FONCTIONNEMENT D'UN MICROPROCESSEUR ET SYSTEME DE REALISATION DE CE PROCEDE

(30) Priority: 03.12.1992 FI 925503
(43) Date of publication of application: 20.09.1995
(73) Proprietor: NOKIA TELECOMMUNICATIONS OY, 02150 Espoo (FI)
(72) Inventor: LOUKUSA, Jarmo, FIN-90570 Oulu (FI); VARANKA, Kauko, FIN-90830 Haukipudas (FI); VEKI, Ilari, FIN-90900 Kiiminki (FI); SÄYNÄJÄKANGAS, Sari, FIN-90570 Oulu (FI); RIEPPO, Mikko, FIN-90500 Oulu (FI); TAKALUOMA, Antti, FIN-91100 Ii (FI)
(74) Representative: Tomlinson, Kerry John
(86) International application number: FI9300520
(87) International publication number: WO9412933

(56) References cited:
- US-A- 4 633 469
- US-A- 4 641 308
- US-A- 5 121 393

## Description

The invention relates to a method of checking the operation of a microprocessor and a system for implementing the method.

In a solution according to the prior art, the logic of a microprocessor is tested by connecting measuring devices directed to the pins of the microprocessor. This is very cumbersome and time-consuming; expensive measuring devices are needed for these tests, which are not always very covering.

The object of this invention is to provide a method and a system, by means of which the drawbacks mentioned above can be avoided.

US-A-5,121,393 describes a system for testing microprocessors which is formed as an integral part of the processor chip. The processor includes an instruction register that is converted into a counter during the test sequence. The counter successively provides codes of test instructions to an integral operation device during the test sequence. The results of the operations performed by the operation device are communicated to a polynomial counter. At the end of the test sequence, the result in the polynomial counter is decoded to automatically determine whether the microprocessor is operating correctly or is defective.

A method of checking the operation of a microprocessor according to the present invention is set out in claim 1. The present invention also provides a system'for checking the operation of a microprocessor as set out in claim 2.

By means of the solution according to the invention, it is possible to access an address and data bus of the microprocessor directly without inconvenient connection of test equipments.

The other preferred embodiments of the method according to the invention and the system according to the invention are characterized in what has been set forth in the appended claims.

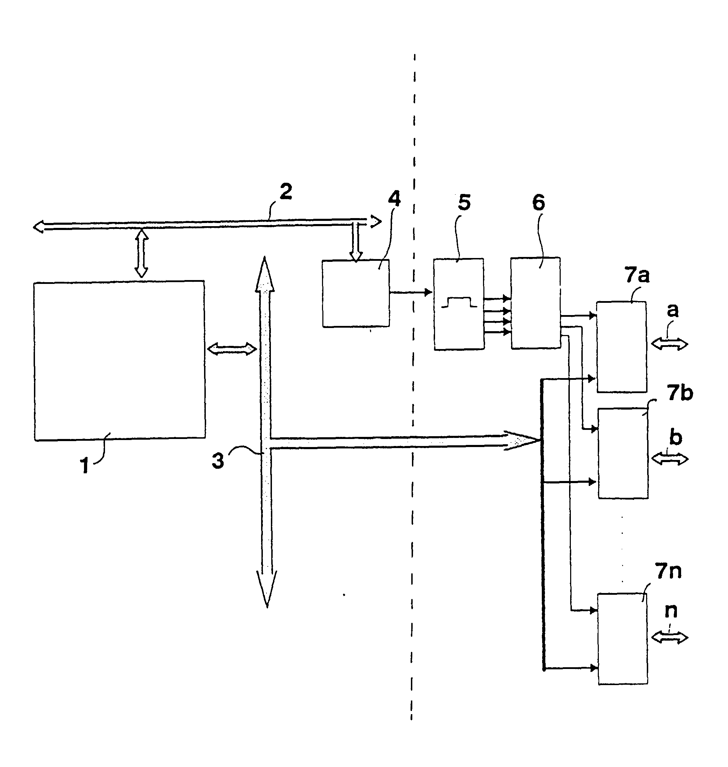

The invention will be described in greater detail in the following with reference to the attached drawing illustrating the system of the invention.

The solution according to the invention is shown in the attached figure. By means of this solution, it is possible to directly access address and data busses, 2 and 3, respectively, of the microprocessor 1 by using simple and cheap circuit solutions.

Uncomplicated and fast test functions are included in the software of the microprocessor, in which statuses selected by a user may be written by means of short writing operations to a test interface of the system according to the invention (right-hand side of the figure from the vertical dash line). These status data may be read quickly and flexibly from the test interface according to the invention by simple methods, e.g. by means of a separate display device to be connected to the interface or by guiding the status data into a display or output device of another system.

In the solution according to the invention, test data are written successively to the data bus 3. After a test function has been activated, an address decoding circuit 4 generates for the test interface a circuit selecting pulse in accordance with the address of the circuit. This pulse starts a counter 5, during stepping of which a BIN/LIN transforming circuit 6 generates a circuit selecting pulse alternately for each register 7a to 7n. The test data coming successively from the data bus 3 may then be read to separate registers each, thus being readable in parallel at register outputs a to n.

The counter 5 may be brought to its initial state according to the figure by using a monostable multivibrator, for instance, which is triggered active by the first writing pulse. The monostable multivibrator sets the counter to zero after a predetermined time, when data bytes to be transmitted at a time (during one update run) have been written to the register. This function makes a flexible change in the number of data bytes to be written possible, without any need to change the test interface. The writing of data bytes always begins with the first register.

The counter 5 may also be set to zero by other methods. The counter may have a separate reset circuit zeroing the counter after the maximum number of data bytes has been written. Then the number of bytes to be written is constant at each update run of the registers.

The solution according to the invention may be applied to testing of all microprocessors. It is thus clear to one skilled in the art that the invention is not limited to the above example, but its various embodiments may vary freely within the scope of the claims set forth below.

## Claims

1. A method of checking the operation of a microprocessor, including the steps of:
including functions performing desired tests in the software of the microprocessor (1);
writing microprocessor status data produced by the tests successively to a data bus (3) of the microprocessor, characterised in that:
the successive status data are read from the data bus (3), each to a separate register (7a to 7n), and the status data representing the results of the tests are presented in parallel at outputs (a to n) of the registers (7a to 7n), wherein for writing the status data, the registers (7a to 7n) are addressed by addressing circuits (4 to 6) over an address bus (2) of the microprocessor (1), which addressing circuits synchronize the reading functions of the registers with the status data coming from the data bus (3).

2. A system for checking the operation of a microprocessor, the system comprising registers (7a to 7n) connected to a data bus (3) of the microprocessor (1), to which registers status data produced by functions included in the software of the microprocessor and performing desired tests may be written over the data bus (3), characterised in that:
said system further comprises addressing circuits (4 to 6) connected to an address bus (2) of the microprocessor, by which addressing circuits the writing of the status data to the registers (7a to 7n) and a parallel presentation at outputs (a to n) of the registers is controlled and by which addressing circuits the reading functions of the registers are synchronised with the status data coming from the data bus (3).

3. A system according to claim 2, characterised in that the addressing circuits of the registers (7a to 7n) belonging to the system comprise an address decoding circuit (4), a counter (5) started by a pulse produced by this circuit and a transforming circuit (6) producing a circuit selecting pulse alternately for each register (7a to 7n) when the counter is stepping.

## Patentansprüche

1. Verfahren zum Überprüfen der Operation eines Mikroprozessors, umfassend die Schritte:
Aufnehmen von Funktionen zum Durchführen gewünschter Tests in die Software des Mikroprozessors **(1)**;
Aufeinanderfolgendes Schreiben von durch die Tests erzeugten Mikroprozessorzustandsdaten auf einen Datenbus **(3)** des Mikroprozessors,
**dadurch gekennzeichnet, daß**
die aufeinanderfolgenden Zustandsdaten von dem Datenbus **(3)** jeweils in ein getrenntes Register **(7a bis 7n)** eingelesen werden, und die die Ergebnisse der Tests repräsentierenden Zustandsdaten an Ausgängen **(a bis n)** der Register **(7a bis 7n)** parallel bereitgestellt werden, wobei die Register **(7a bis 7n)** beim Einschreiben der Zustandsdaten durch Adressierschaltungen **(4 bis 6)** über einen Adressbus **(2)** des Mikroprozessors **(1)** adressiert werden, wobei die Adressierschaltungen die Lesefunktionen der Register mit den von den Datenbus **(3)** kommenden Zustandsdaten synchronisieren.

2. System zum Überprüfen der Operation eines Mikroprozessors, wobei das System mit einem Datenbus **(3)** des Mikroprozessors **(1)** verbundene Register **(7a bis 7n)** umfaßt, in die durch in der Software des Mikroprozessors enthaltene und gewünschte Tests durchführende Funktionen erzeugte Zustandsdaten über den Datenbus **(3)** beschrieben werden können,
**dadurch gekennzeichnet, daß**
das System weiterhin umfaßt Adressierschaltungen **(4 bis 6)**, die mit einem Adreßbus **(2)** des Mikroprozessors verbunden sind, durch die das Schreiben der Zustandsdaten in die Register **(7a bis 7n)** und ein paralleles Bereitstellen an Ausgängen **(a bis n)** der Register gesteuert wird, und durch die die Lesefunktionen der Register mit den von dem Datenbus **(3)** kommenden Statusdaten synchronisiert werden.

3. System nach Anspruch 2,
**dadurch gekennzeichnet, daß**
die Adressierschaltungen der zu dem System gehörenden Register **(7a bis 7n)** umfassen eine Adreßdecodierschaltung **(4)**, einen Zähler **(5)**, der durch einen durch diese Schaltung erzeugten Impuls gestartet wird, und eine Umwandlungsschaltung **(6)** zum Erzeugen eines Schaltungsauswahlimpulses abwechselnd für jedes Register **(7a bis 7n)**, wenn der Zähler fortschreitet.

## Revendications

1. Procédé de contrôle du fonctionnement d'un microprocesseur, comprenant les étapes consistant à :
inclure dans le logiciel du microprocesseur (1) des fonctions effectuant des contrôles voulus;
inscrire successivement dans un bus (3) de données les données d'état de microprocesseur produites par les contrôles, caractérisé en ce que
les données d'état successives sont extraites du bus (3) de données pour être inscrites chacune dans un registre séparé (7a à 7n), et les données d'état représentant les résultats des contrôles sont présentées en parallèle à des sorties (a à n) des registres (7a à 7n), procédé dans lequel, pour inscrire les données d'état, l'accès aux registres (7a à 7n) se fait par des circuits d'adressage (4 à 6) sur un bus (2) d'adresses du microprocesseur (1), lesquels circuits d'adressage synchronisent les fonctions de lecture des registres avec les données d'état arrivant du bus (3) de données.

2. Système pour contrôler le fonctionnement d'un microprocesseur, le système comprenant des registres (7a à 7n) connectés à un bus (3) de données du microprocesseur (1), registres dans lesquels des données d'état produites par des fonctions incluses dans le logiciel du microprocesseur et effectuant des contrôles voulus peuvent être inscrites sur le bus (3) de données, caractérisé en ce que :
ledit système comprend en outre des circuits d'adressage (4 à 6) connectés à un bus (2) d'adresses du microprocesseur, circuits d'adressage par lesquels est commandée l'inscription des données d'état dans les registres (7a à 7n) et une présentation en parallèle aux sorties (a à n) des registres, par lesquels les fonctions de lecture des registres sont synchronisées avec les données d'état arrivant du bus (3) de données.

3. Système selon la revendication 2, caractérisé en ce que les circuits d'adressage des registres (7a à 7n) appartenant au système comprennent un circuit (4) de décodage d'adresses, un compteur (5) mis en marche par une impulsion produite par ce circuit et un circuit de transformation (6) produisant une impulsion de sélection de circuit en alternance pour chaque registre (7a à 7n) lorsque le compteur fonctionne pas à pas.
